# NEUE EUROPÄISCHE PATENTSCHRIFT

(11) **EP 1 116 892 B2**
(45) Veröffentlichungstag und Bekanntmachung des Hinweises auf die Entscheidung über den Einspruch: **18.05.2011**
(45) Hinweis auf die Patenterteilung: 22.03.2006
(21) Anmeldenummer: 01100738.2
(22) Anmeldetag: 12.01.2001
(51) Int. Cl.: F16C 13/00, D21G 1/02

(54) **Elastische Walze und Verfahren zum Herstellen einer solchen**
Soft roll and process for making such a roll
Rouleau élastique et procédé de fabrication d' un tel rouleau

(30) Priorität: 14.01.2000 DE 10001409
(43) Veröffentlichungstag der Anmeldung: 18.07.2001
(73) Patentinhaber: Voith Patent GmbH, 89522 Heidenheim (DE)
(72) Erfinder: Zimmermann, Lothar, Dr.-Ing., 47807 Krefeld (DE)
(74) Vertreter: Manitz, Finsterwald & Partner GbR

(56) Entgegenhaltungen:
- WO-A-94/09208
- WO-A-98/54405
- WO-A1-98/56984
- DE-A- 19 543 555
- JP-A- 63 227 666
- US-A- 2 534 818
- US-A- 4 368 568
- US-A- 5 176 940
- US-A- 5 258 426
- US-A- 5 551 176
- US-A- 5 629 062
- POLYTRON KUNSTOFFTECHNIK: 'Ketron und Oxpekk' WERKSTEFFBROSCHÜRE KETRON UND OXEKK Seiten 1 - 6

## Beschreibung

Die vorliegende Erfindung betrifft eine Walze, insbesondere zum Glätten von Papierbahnen, mit einem insbesondere aus Metall bestehenden, harten Walzenkern, der an seiner Außenseite mit einer ein elastisches Matrixmaterial umfassenden elastischen Bezugsschicht versehen ist. Weiterhin ist die Erfindung auf ein Verfahren zum Herstellen einer solchen Walze gerichtet.

Elastische Walzen dieser Art werden beispielsweise bei der Satinage von Papierbahnen verwendet. Dabei bildet jeweils eine elastische Walze zusammen mit einer harten Walze eine Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Die Größenordnung der Walzen liegt bei Längen von 3 bis 12 m bzw. Durchmessern von 450 bis 1500 mm. Sie halten Linienkräften bis zu 600 N/mm und Druckspannungen bis 130 N/mm² stand.

Ein bekanntes Problem bei elastischen Walzen sind die sogenannten Markierungen, das sind Abdrücke in der Außenseite der Bezugsschicht, die beispielsweise durch Fremdkörper oder Falten in der Papierbahn entstehen. Markierungen, die sich dauerhaft in der Oberfläche der Bezugsschicht ausbilden, werden auf die Oberfläche der durch den Preßnip geführten Papierbahn übertragen, so daß die den Kalander verlassende Papierbahn oftmals nicht die erforderliche Qualität besitzt und es erforderlich ist, die Markierungen aus Qualitätsgründen zu entfernen.

Neben diesen Qualitätsproblemen können Markierungen jedoch auch zu einer Zerstörung der Bezugsschicht führen. Da die Tendenz bei der Papierherstellung dahin geht, daß die Satinage im Online-Betrieb erfolgt, d. h. daß die die Papiermaschine oder Streichmaschine verlassende Papierbahn unmittelbar durch die Papierglättvorrichtung (Kalander) geführt wird, sind entsprechend hohe Transportgeschwindigkeiten der Papierbahn und damit verbunden hohe Rotationsgeschwindigkeiten der Kalanderwalzen erforderlich. Durch diese hohen Rotationsgeschwindigkeiten wird die Nipfrequenz der Kalanderwalzen, das ist die Frequenz mit der der Bezug komprimiert und wieder entlastet wird, erhöht, was wiederum zu erhöhten Walzentemperaturen führt. An stark ausgeprägten Markierungen können in Verbindung mit den erhöhten Walzentemperaturen sogenannten Hot-Spots auftreten, an denen ein Ablösen oder sogar ein Aufplatzen der Bezugsschicht erfolgen kann.

Als Basismaterial für die Bezugsschicht von elastischen Walzen werden heutzutage üblicherweise Duroplaste verwendet. Duroplaste besitzen den Vorteil, daß sie bis zu ihrer jeweiligen Glasübergangstemperatur Tg eine hohe Elastizität besitzen und daher zur Bildung der elastischen Bezugsschicht gut geeignet sind. Allerdings besitzen Duroplaste die Eigenschaft, daß sie nach einmaligem Erhitzen bis in den Bereich des Tg-Temperaturwertes und anschließendem Aushärten nur noch Temperaturen unterhalb des Tg-Wertes ausgesetzt werden dürfen, da sie nach dem Aushärten bei Temperaturen oberhalb des Tg-Wertes zerstört werden.

Elastische Walzen mit einer Bezugsschicht basierend auf reinen Duroplasten haben somit den Nachteil, daß die Bezugsschicht bei einer Erhöhung ihrer Temperatur über den Tg-Wert zerstört wird. Markierungen in der Oberfläche der Bezugsschicht können bei solchen Walzen nur durch Abschleifen der gesamten Bezugsschichtoberfläche entfernt werden. Das Abschleifen von elastischen Walzen ist jedoch ein sehr aufwendiger Vorgang, der Spezialmaschinen erfordert und daher zu relativ langen Ausfallzeiten einer entsprechenden Papierglättvorrichtung führt.

Es ist eine Aufgabe der vorliegenden Erfindung, eine elastische Walze der eingangs genannten Art anzugeben, bei der Markierungen in der Oberfläche der Bezugsschicht relativ einfach repariert werden können. Weiterhin sollen Temperaturanstiege in den Bereich der Glasübergangstemperatur des Matrixmaterials nicht zu einer Zerstörung der Bezugsschicht führen sowie ein Verfahren zum Herstellen einer solchen Walze angegeben werden.

Der die Walze betreffende Teil der Aufgabe wird ausgehend von einer elastischen Walze der eingangs genannten Art dadurch gelöst, daß das elastische Matrixmaterial eine Mischung aus Duroplast und Thermoplast umfaßt, wobei die Schmelztemperatur des oder der Thermoplaste unterhalb der Glasübergangstemperatur des oder der Duroplaste liegt. Ein entsprechendes erfindungsgemäßes Verfahren ist dadurch gekennzeichnet, daß zum Bilden der elastischen Bezugsschicht zumindest ein Duroplast und zumindest ein Thermoplast, wobei die Schmelztemperatur des oder der Thermoplaste unterhalb der Glasübergangstemperatur des oder der Duroplaste liegt, miteinander vermischt werden und daß die resultierende Mischung auf den Walzenkern aufgebracht wird.

Erfindungsgemäß werden somit die Vorteile der bekannten Duroplaste, insbesondere deren hohe Elastizität, mit dem Vorteil der Thermoplaste, nämlich einer wiederholten Schmelzfähigkeit, kombiniert. Auf diese Weise können Markierungen in einer erfindungsgemäß ausgebildeten Bezugsschicht ohne Abschleifen, nämlich durch einfaches Erhitzen über die Schmelztemperatur des Thermoplastes, entfernt werden. Insbesondere wenn während des Erhitzungsvorgangs die Walze in Rotation versetzt wird, wird in der Regel auch ohne zusätzliche Nachbearbeitung eine ausreichende Oberflächenqualität der reparierten Bezugsschicht erzielt. Bei tiefergehenden Markierungen kann während oder nach dem Erhitzen gleichzeitig eine Glättebehandlung der Oberfläche der Bezugsschicht durchgeführt werden.

Nach einer vorteilhaften Ausführungsform der Erfindung ist der Anteil an Duroplast höher als der Anteil an Thermoplast und liegt vorteilhaft zwischen ca. 50 und 80 %, insbesondere zwischen ca. 60 und 75 % und beträgt bevorzugt ca. 70 %. Durch die angegebenen Mischungsverhältnisse ist gewährleistet, daß die Elastizität der Bezugsschicht ausreichend hoch ist, da Duroplaste üblicherweise eine höhere Elastizität als Thermoplaste besitzen.

Nach einer weiteren bevorzugten Ausführungsform der Erfindung enthält die Mischung unterschiedliche Duroplaste und/oder unterschiedliche Thermoplaste. Auf diese Weise können gewünschte physikalische Eigenschaften der Bezugsschicht durch Verwendung unterschiedlicher Grundmaterialien eingestellt werden. Beispielsweise kann durch Mischung unterschiedlicher Duroplaste deren Gesamtwärmeübergangstemperatur und durch Mischung unterschiedlicher Thermoplaste deren Gesamtschmelztemperatur eingestellt werden.

Vorteilhaft ist das Mischungsverhältnis von Duro- und Thermoplast über die axial Länge der Bezugsschicht im wesentlichen konstant. Dadurch ist gewährleistet, daß die physikalischen Eigenschaften der Bezugsschicht, wie Elastizität, Temperaturbeständigkeit und Schmelzpunkt in axialer Richtung einheitlich sind, so daß auch die zu behandelnde Papierbahn über ihre gesamte Breite eine einheitliche Qualität besitzt.

Das Mischungsverhältnis von Duro- und Thermoplast über die radiale Dicke der Bezugsschicht kann im wesentlichen konstant sein, es ist jedoch auch möglich, daß das Mischungsverhältnis von Duro- und Thermoplast über die radiale Dicke der Bezugsschicht variiert. Auf diese Weise kann beispielsweise die Elastizität der Bezugsschicht in radialer Richtung wie gewünscht angepaßt werden.

Nach einer vorteilhaften Ausführungsform nimmt der Anteil an Thermoplast radial nach außen zu, da auf diese Weise die an der Oberfläche der Bezugsschicht auftretenden Markierungen besonders effizient durch Erhitzen der Bezugsschicht entfernt werden können.

Nach einer weiteren bevorzugten Ausführungsform der Erfindung sind in dem Matrixmaterial der Bezugsschicht Fasern, insbesondere in Form einer oder mehrerer Faserlagen eingebettet. Die Fasern können dabei beispielsweise als Glas- und/oder als Kohle- und/oder als Aramidfasern ausgebildet sein.

Durch die Fasern wird zum einen eine Verstärkung des Matrixmaterials erreicht und zum anderen kann die Wärmeleitfähigkeit der Bezugsschicht durch die Wahl entsprechender Fasermaterialien erhöht werden. Dadurch ist gewährleistet, daß die innerhalb der Bezugsschicht an Überhitzungsstellen auftretende, unerwünschte Wärme schnell seitlich nach außen, in Richtung der Bezugsschichtoberfläche oder zum Walzenkern, je nach Anordnung der Fasern innerhalb der Bezugsschicht, abgeleitet wird.

In entsprechender Weise können in dem Matrixmaterial zusätzliche Füllstoffe, beispielsweise in Pulverform enthalten sein, durch die ebenfalls physikalische Eigenschaften der Bezugsschicht, wie z.B. Wärmeleitfähigkeit, Wärmeausdehnungskoeffizient oder sonstige gewünschte Eigenschaften eingestellt werden können.

Erfindungsgemäß liegt die Schmelztemperatur des oder der Thermoplaste unterhalb der Glasübergangstemperatur des oder der Duroplaste. Durch die Wahl entsprechender Thermo- und Duroplaste bzw. entsprechender Thermo- und Duroplastgemische ist es möglich, die Bezugsschicht über die Schmelztemperatur des Thermoplasts bzw. des Thermoplastgemisches zu erhöhen und somit das für das Entfernen erforderliche Schmelzen bzw. Anschmelzen der Bezugsschicht zu erreichen, ohne daß der Duroplastanteil der Bezugsschicht durch Überhitzung zerstört wird.

Zur Erzeugung einer erfindungsgemäßen elastischen Walze wird zum Bilden der elastischen Bezugsschicht zumindest ein Duroplast und zumindest ein Thermoplast miteinander vermischt, woraufhin die resultierende Mischung auf den Walzenkern aufgebracht wird. Dabei kann eine Vielzahl von Fasern, insbesondere in Form eines oder mehrerer Faserbündel und/oder Faserrovings und/oder Faservliese mit der Mischung imprägniert, insbesondere durch ein aus der Mischung bestehendes Matrixbad gezogen werden, woraufhin die imprägnierten Fasern auf den Walzenkern aufgewickelt werden.

Es ist jedoch auch möglich, daß die Fasern im wesentlichen trocken auf den Walzenkern aufgewickelt werden und während und/oder nach dem Aufwickeln mit der Mischung beaufschlagt, insbesondere vollständig in die Mischung eingebettet werden.

Eine andere Möglichkeit der Herstellung besteht darin, daß die zylindermantelförmige Bezugsschicht getrennt vom Walzenkern, beispielsweise durch Spritzen, Wickeln auf einen Wickelkern, Gießen, Extrusion oder ein sonstiges Herstellungsverfahren gebildet und anschließend auf den Walzenkern aufgebracht, beispielsweise auf diesen aufgeschoben wird. Um einen festen Sitz auf dem Walzenkern zu erreichen, kann die Bezugsschicht dann beispielsweise auf den Walzenkern aufgeschrumpft werden oder es kann eine Verbindungsschicht zwischen Walzenkern und Bezugsschicht vorgesehen sein.

Grundsätzlich ist es auch möglich, die Bezugsschicht zunächst nur aus Duroplast und gegebenenfalls Füllstoffen und/oder Fasern herzustellen und das Thermoplast anschließend in die halbfertige Bezugsschicht einzulagern.

Prinzipiell ist es sowohl möglich, daß das Mischen von Duroplast und Thermoplast durch einen physikalischen, beispielsweise einen mechanischen Mischvorgang, wie beispielsweise einen Rührvorgang, oder durch einen chemischen Mischvorgang, beispielsweise eine Copolymerisation, oder durch beide Mischverfahren erfolgt. Dabei ist unter dem Begriff physikalischer Mischvorgang ein Mischvorgang zu verstehen, bei dem die Struktur des Duroplastes und des Thermoplastes auf Molekularebene keine Veränderung erfährt. Ein chemischer Mischvorgang stellt hingegen eine Mischung auf Molekularebene dar und ist mit einer Änderung der Molekularstruktur der Ausgangsmaterialien verbunden.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnung näher erläutert; in dieser zeigen:
- Fig. 1: eine schematische, teilweise aufgerissen dargestellte Seitenansicht einer erfindungsgemäß ausgebildeten Walze und
- Fig. 2: den aufgerissenen Teil der Walze nach Fig. 1 in vergrößerter Darstellung.

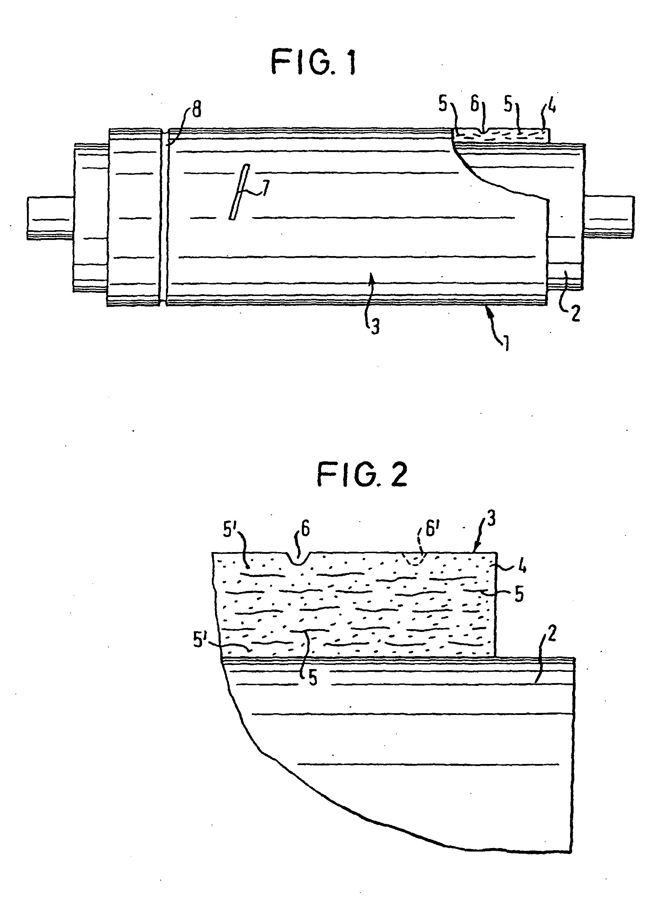

Fig. 1 zeigt eine Walze 1, die einen beispielsweise aus Stahl oder Hartguß bestehenden Walzenkern 2 sowie eine an dessen Außenseite vorgesehene elastische Bezugsschicht 3 umfaßt.

Aus der in der oberen Hälfte der Fig. 1 schematisch aufgerissen dargestellten Ansicht ist zu erkennen, daß die elastische Bezugsschicht 3 ein elastisches Matrixmaterial 4 und darin eingebettete Füllstoffe 5, beispielsweise Fasern, pulverförmige Füllstoffe oder dergleichen, umfaßt.

Das Matrixmaterial 4 ist als eine Mischung aus Thermoplasten und Duroplasten ausgebildet, wobei bevorzugt der Anteil der Duroplaste in dem Gemisch größer ist als der Anteil der Thermoplaste. Die beispielsweise als Fasern ausgebildeten Füllstoffe 5 können Faserlagen bilden, die zur Bildung der Walze jeweils mit dem Matrixmaterial 4 imprägniert werden und auf den Walzenkern 2 z.B. in schrägen Wicklungen aufgewickelt werden. Dabei können die Wickelwinkel der einzelnen Wickellagen gegeneinander so gewechselt werden, daß die einzelnen Faserlagen im Kreuzverbund gegeneinander gewickelt sind.

Die Bezugsschicht 3 kann, wie in Fig. 1 dargestellt, unmittelbar auf den Walzenkern 2 aufgebracht sein, es ist jedoch auch möglich, daß zwischen der Bezugsschicht 3 und dem Walzenkern 2 eine Verbindungsschicht ausgebildet ist, um eine bessere Haftung der Bezugsschicht 3 auf dem Walzenkern 2 zu erreichen. Weiterhin kann auch die Verteilung sowie die Art der Füllstoffe 5 innerhalb der elastischen Bezugsschicht 3 sich über deren radiale Ausdehnung verändern, so daß der radial außen gelegene Bereich der Bezugsschicht 3 andere physikalische Eigenschaften, beispielsweise eine höhere Elastizität, besitzt als der radial innenliegende Bereich der Bezugsschicht 3.

In Fig. 1 sind weiterhin drei Markierungen 6, 7, 8 schematisch dargestellt, die Vertiefungen in der Oberfläche der elastischen Bezugsschicht 3 bilden. Diese Markierungen 6, 7, 8 können beispielsweise durch in den Preßnip zwischen der Walze 1 und einer beispielsweise harten Gegenwalze eintretende Fremdkörper oder durch Falten in der in den Preßnip einlaufenden Papierbahn verursacht werden. Dabei können sich die Markierungen, wie beispielsweise die Markierung 7, nur über einen Teilbereich der elastischen Bezugsschicht 3 oder, wie die Markierung 8, über den gesamten Umfang der elastischen Bezugsschicht 3 erstrecken.

In der in Fig. 2 dargestellten Ausschnittsvergrößerung ist die Markierung 6 deutlicher als Einkerbung in der Oberfläche der elastischen Bezugsschicht 3 zu erkennen. Weiterhin sind sowohl faserförmige Füllstoffe 5 als auch pulverförmige Füllstoffe 5' dargestellt, durch die jeweilige gewünschte physikalische Eigenschaften der Bezugsschicht 3, wie beispielsweise deren Steifigkeit, Wärmeleitfähigkeit, Wärmeausdehnungkoeffizient und dergleichen eingestellt werden können.

Während bei einer Bezugsschicht, die lediglich aus einem Duroplast mit eventuell eingebetteten Füllstoffen besteht, eine solche Markierung nur durch Abschleifen der gesamten Oberfläche der Bezugsschicht entfernt werden kann, ist es bei einer erfindungsgemäßen Walze mit einer elastischen Bezugsschicht 3, die aus einer Mischung von zumindest einem Duroplast und einem Thermoplast besteht, möglich, die Markierung 6 durch Erhitzen der Bezugsschicht 3 über den Schmelzpunkt des Matrixmaterials 4 zu beseitigen.

Durch diese Erhitzung wird das aus dem Thermoplast und dem Duroplast bestehende Gemisch soweit flüssig, daß insbesondere bei einem gleichzeitigen Rotieren der Walze 1 das flüssige Matrixmaterial 4 in die die Markierung bildende Vertiefung hineinfließt. Dieser Ausgleichsvorgang wird durch die aufgrund der Rotierung entstehende Zentrifugalkraft noch erhöht.

Bei genügender Erhitzung wird die Markierung 6 wieder vollständig mit Matrixmaterial 4 gefüllt, wie es anhand einer gestrichelt dargestellten Markierung 6' veranschaulicht ist. Die Bezugsschicht 3 erhält somit wieder eine vollständig glatte Oberfläche, so daß ein Abschleifen der Bezugsschicht 3 nicht erforderlich ist.

Um eine noch bessere Glätte der Oberfläche der Bezugsschicht 3 zu erhalten, kann die Oberfläche im Bereich der wieder ausgefüllten Markierung 6' zusätzlich noch in einem Glättvorgang geglättet und/oder poliert werden. Dies kann während des Heizvorgangs oder nach Abkühlen der Oberfläche der Bezugsschicht 3 erfolgen.

Grundsätzlich ist es auch denkbar, wenn sich das Matrixmaterial im Bereich der Markierung 6 im erhitzten angeschmolzenen bzw. geschmolzenen Zustand befindet, in die Markierung geschmolzenes Matrixmaterial der gleichen Art einzufüllen, das sich dieses aufgrund des flüssigen bzw. nahezu flüssigen Aggregatzustandes beider Materialien innig mit dem Matrixmaterial 4 der Bezugsschicht 3 verbindet. Auch hier kann zusätzlich noch im heißen Zustand oder nach dem Erkalten ein zusätzlicher Glätt- und/oder Poliervorgang der Oberfläche der reparierten Bezugsschicht 3 erfolgen.

### Bezugszeichenliste

- 1: Walze
- 2: Walzenkern
- 3: elastische Bezugsschicht
- 4: Matrixmaterial
- 5, 5': Füllstoffe
- 6: Markierung
- 6': reparierte Markierung
- 7: Markierung
- 8: Markierung

## Patentansprüche

1. Walze, insbesondere zum Glätten von Papierbahnen, mit einem insbesondere aus Metall bestehenden, harten Walzenkern (2), der an seiner Außenseite mit einer ein elastisches Matrixmaterial (4) umfassenden elastischen Bezugsschicht (3) versehen ist,
**dadurch gekennzeichnet,**
**dass** das elastische Matrixmaterial (4) eine Mischung aus Duroplast und Thermoplast umfasst, wobei die Schmelztemperatur des oder der Thermoplaste unterhalb der Glasübergangstemperatur des oder der Duroplaste liegt.

2. Walze nach Anspruch 1,
**dadurch gekennzeichnet,**
**dass** der Anteil an Duroplast höher ist als der Anteil an Thermoplast, insbesondere dass der Anteil an Duroplast zwischen ca. 50 und 80 %, insbesondere zwischen ca. 60 und 75 % liegt, bevorzugt ca. 70 % beträgt.

3. Walze nach Anspruch 1 oder 2,
**dadurch gekennzeichnet,**
**dass** die Mischung unterschiedliche Duroplaste enthält und/oder dass die Mischung unterschiedliche Thermoplaste enthält.

4. Walze nach einem der vorhergehenden Ansprüche,
**dadurch gekennzeichnet,**
**dass** das Mischungsverhältnis von Duro- und Thermoplast über die axiale Länge der Bezugsschicht (3) im wesentlichen konstant ist.

5. Walze nach einem der vorhergehenden Ansprüche,
**dadurch gekennzeichnet,**
**dass** das Mischungsverhältnis von Duro- und Thermoplast über die radiale Dicke der Bezugsschicht (3) im wesentlichen konstant ist.

6. Walze nach einem der Ansprüche 1 bis 4,
**dadurch gekennzeichnet,**
**dass** das Mischungsverhältnis von Duro- und Thermoplast über die radiale Dicke der Bezugsschicht (3) variiert, insbesondere dass der Anteil an Thermoplast radial nach außen zunimmt.

7. Walze nach einem der vorhergehenden Ansprüche,
**dadurch gekennzeichnet,**
**dass** in dem Matrixmaterial (4) der Bezugsschicht (3) Fasern (5), insbesondere in Form einer oder mehrerer Faserlagen eingebettet sind, insbesondere dass die Fasern (5) als Glas- und/oder als Kohle- und/oder als Aramidfasern ausgebildet sind.

8. Walze nach einem der vorhergehenden Ansprüche,
**dadurch gekennzeichnet,**
**dass** in dem Matrixmaterial (4) zusätzliche Füllstoffe (5'), beispielsweise in Pulverform enthalten sind.

9. Verfahren zum Herstellen einer elastischen Walze mit einem insbesondere aus Metall bestehenden, harten Walzenkern und einer ein elastisches Matrixmaterial umfassenden elastischen Bezugsschicht nach einem der Ansprüche 1 bis 8,
**dadurch gekennzeichnet,**
**dass** zum Bilden der elastischen Bezugsschicht zumindest ein Duroplast und zumindest ein Thermoplast miteinander vermischt werden und dass die resultierende Mischung auf den Walzenkern aufgebracht wird.

10. Verfahren nach Anspruch 9,
**dadurch gekennzeichnet,**
**dass** eine Vielzahl von Fasern, insbesondere in Form eines oder mehrerer Faserbündel und/oder Faserrovings und/oder Faservliese mit der Mischung imprägniert, insbesondere durch ein aus der Mischung bestehendes Matrixbad gezogen wird, und dass die imprägnierten Fasern auf den Walzenkern aufgewickelt werden.

11. Verfahren nach Anspruch 9,
**dadurch gekennzeichnet,**
**dass** eine Vielzahl von Fasern, insbesondere in Form eines oder mehrerer Faserbündel und/oder Faserrovings und/oder Faservliese im wesentlichen trocken auf den Walzenkern aufgewickelt wird und dass die Fasern während und/oder nach dem Aufwickeln mit der Mischung beaufschlagt, insbesondere vollständig in die Mischung eingebettet werden.

12. Verfahren nach einem der Ansprüche 9 bis 11,
**dadurch gekennzeichnet,**
**dass** das Vermischen von Duroplast und Thermoplast durch einen physikalischen, insbesondere einen mechanischen Mischvorgang erfolgt und/oder dass das Vermischen von Duroplast und Thermoplast durch einen chemischen Mischvorgang, insbesondere durch Copolymerisation erfolgt.

## Claims

1. A roll, in particular for the smoothing of paper webs, having a hard roll core (2), consisting in particular of metal, which is provided on its outside with an elastic covering layer (3) comprising an elastic matrix material (4), **characterized in that** the elastic matrix material (4) comprises a mixture of thermosetting plastic and thermoplastic, wherein the melting temperature of the thermoplastic or thermoplastics is below the glass transition temperature of the thermosetting plastic or plastics.

2. A roll in accordance with claim 1, **characterized in that** the proportion of thermosetting plastic is higher than the proportion of thermoplastic; in particular **in that** the proportion of thermosetting plastic is between approximately 50 and 80%, in particular between approximately 60 and 75%, and preferably amounts to approximately 70%.

3. A roll in accordance with claim 1 or claim 2, **characterized in that** the mixture contains different thermosetting plastics; and/or **in that** the mixture contains different thermoplastics.

4. A roll in accordance with any one of the preceding claims, **characterized in that** the mixture ratio of thermosetting plastic and thermoplastic is substantially constant over the axial length of the covering layer (3).

5. A roll in accordance with any one of the preceding claims, **characterized in that** the mixture ratio of thermosetting plastic and thermoplastic is essentially constant over the radial thickness of the covering layer (3).

6. A roll in accordance with any one of the claims 1 to 4, **characterized in that** the mixture ratio of thermosetting plastic and thermoplastic varies over the radial thickness of the covering layer (3); in particular **in that** the proportion of thermoplastic increases radially outwardly.

7. A roll in accordance with any one of the preceding claims, **characterized in that** fibers (5) are embedded in the matrix material (4) of the covering layer (3), in particular in the form of one or more fiber layers; in particular **in that** the fibers (5) are made as glass fibers and/or carbon fibers and/or aramide fibers.

8. A roll in accordance with any one of the preceding claims, **characterized in that** additional fillers (5') are contained in the matrix material (4), for example in powder form.

9. A method for the manufacture of an elastic roll having a hard roll core, consisting in particular of metal, and an elastic covering layer comprising an elastic matrix material, in accordance with any one of claims 1 to 8, **characterized in that** at least one thermosetting plastic and at least one thermoplastic are mixed together to form the elastic covering layer; and **in that** the resulting mixture is applied to the roll core.

10. A method in accordance with claim 9, **characterized in that** a plurality of fibers, in particular in the form of one or more fiber bundles and/or fiber rovings and/or fiber fleeces, are impregnated with the mixture and are in particular drawn through a matrix bath consisting of the mixture; and **in that** the impregnated fibers are wound onto the roll core.

11. A method in accordance with claim 9, **characterized in that** a plurality of fibers, in particular in the form of one or more fiber bundles and/or fiber rovings and/or fiber fleeces, are wound onto the roll core in a substantially dry state; and **in that** the fibers are loaded with the mixture, in particular completely embedded in the mixture, during and/or after winding up.

12. A method in accordance with any one of the claims 9 to 11, **characterized in that** the mixing of thermosetting plastic and thermoplastic is carried out by a physical, in particular by a mechanical, mixing procedure; and/or **in that** the mixing of thermosetting plastic and thermoplastic is carried out by a chemical mixing process, in particular by copolymerization.

## Revendications

1. Cylindre, en particulier pour lisser des bandes de papier, comportant un noyau de cylindre (2) dur constitué en particulier de métal qui est pourvu sur son côté extérieur d'une couche de revêtement élastique (3) comprenant un matériau de matrice élastique (4),
**caractérisé en ce que**
le matériau de matrice élastique (4) comprend un mélange de matière thermodurcissable et de matière thermoplastique, la température de fusion de la ou des matières thermoplastiques étant inférieure à la température de transition vitreuse de la ou des matières thermodurcissables.

2. Cylindre selon la revendication 1,
**caractérisé en ce que**
la part de matière thermodurcissable est supérieure à la part de matière thermoplastique, en particulier **en ce que** la part de matière thermodurcissable est comprise entre environ 50 et 80 %, en particulier entre environ 60 et 75 %, de préférence égale à environ 70 %.

3. Cylindre selon l'une ou l'autre des revendications 1 et 2,
**caractérisé en ce que**
le mélange contient différentes matières thermodurcissables et/ou **en ce que** le mélange contient différentes matières thermoplastiques.

4. Cylindre selon l'une des revendications précédentes,
**caractérisé en ce que**
le rapport de mélange de matière thermodurcissable et de matière thermoplastique est sensiblement constant sur la longueur axiale de la couche de revêtement (3).

5. Cylindre selon l'une des revendications précédentes,
**caractérisé en ce que**
le rapport de mélange de matière thermodurcissable et de matière thermoplastique est sensiblement constant sur l'épaisseur radiale de la couche de revêtement (3).

6. Cylindre selon l'une des revendications 1 à 4,
**caractérisé en ce que**
le rapport de mélange de matière thermodurcissable et de matière thermoplastique varie sur l'épaisseur radiale de la couche de revêtement (3), en particulier en ce que la part de matière thermoplastique augmente radialement vers l'extérieur.

7. Cylindre selon l'une des revendications précédentes,
**caractérisé en ce que**
dans le matériau de matrice (4) de la couche de revêtement (3) sont noyées des fibres (5), en particulier sous la forme d'une ou de plusieurs couches de fibres, en particulier **en ce que** les fibres (5) sont réalisées sous forme de fibres de verre et/ou de fibres de carbone et/ou de fibres d'aramide.

8. Cylindre selon l'une des revendications précédentes,
**caractérisé en ce que**
dans le matériau de matrice (4) sont contenues des substances de charge supplémentaires (5'), par exemple sous forme de poudre.

9. Procédé pour fabriquer un cylindre élastique comportant un noyau de cylindre dur constitué en particulier de métal et une couche de revêtement élastique contenant un matériau de matrice élastique, selon l'une des revendications 1 à 8,
**caractérisé en ce que**
pour former la couche de revêtement élastique, on mélange mutuellement au moins une matière thermodurcissable et au moins une matière thermoplastique, et **en ce que** l'on applique le mélange résultant sur le noyau de cylindre.

10. Procédé selon la revendication 9,
**caractérisé en ce que**
l'on imprègne avec le mélange une multitude de fibres, en particulier sous la forme d'un ou de plusieurs faisceaux de fibres et/ou de stratifils de fibres et/ou de non-tissés de fibres, en particulier on les tire à travers un bain de matrice constitué du mélange, et **en ce que** l'on enroule les fibres imprégnées sur le noyau de cylindre.

11. Procédé selon la revendication 9,
**caractérisé en ce que**
on enroule sur le noyau de cylindre une multitude de fibres sensiblement à sec, en particulier sous la forme d'un ou de plusieurs faisceaux de fibres et/ou de stratifils de fibres et/ou de non-tissés de fibres, et **en ce que** pendant et/ou après l'enroulement on applique le mélange sur les fibres, en particulier on les noie complètement dans le mélange.

12. Procédé selon l'une des revendications 9 à 11,
**caractérisé en ce que**
le mélangeage de matière thermodurcissable et de matière thermoplastique s'effectue par une opération de mélangeage physique, en particulier mécanique, et/ou **en ce que** le mélangeage de matière thermodurcissable et de matière thermoplastique s'effectue par une opération de mélangeage chimique, en particulier par copolymérisation.
